# EUROPEAN PATENT APPLICATION

(11) **EP 4 053 429 A1**
(43) Date of publication of application: **07.09.2022**
(21) Application number: 22159984.8
(22) Date of filing: 03.03.2022
(51) Int. Cl.: F16G 5/08, F16G 5/20

(54) **V-RIBBED BELT**

(30) Priority: 05.03.2021 JP 2021035470
(71) Applicant: Bando Chemical Industries, Ltd., Kobe-shi, Hyogo 650-0047 (JP)
(72) Inventor: KOBAYASHI, Shogo, Hyogo, 6500047 (JP); SHINDO, Yuya, Hyogo, 6500047 (JP); MATSUDA, Kazuaki, Hyogo, 6500047 (JP); OKUBO, Takayuki, Hyogo, 6500047 (JP)
(74) Representative: Sajda, Wolf E.

(57) **Abstract**

A V-ribbed belt (B) includes a plurality of V-shaped ribs (15), each of the plurality of V-shaped ribs (15) includes a V-shaped rib body (11a) formed from a crosslinked rubber composition and a fiber member covering a surface of the V-shaped rib body (11a), the crosslinked rubber composition is a crosslinked product of an uncrosslinked rubber composition containing a rubber component, a crosslinking agent, and at least either an unsaturated carboxylic acid metal salt or a maleimide compound, and a total amount of the unsaturated carboxylic acid metal salt and the maleimide compound per 100 parts by mass of the rubber component is 1 to 40 parts by mass.

## Description

### TECHNICAL FIELD

The present invention relates to a V-ribbed belt.

This application claims priority on Japanese Patent Application No. 2021-035470 filed on March 5, 2021, the entire content of which is incorporated herein by reference.

### BACKGROUND ART

Conventionally, as a means for transmitting rotational power of an engine, a motor, or the like, a method in which pulleys are fixedly provided on rotation shafts on a driving side and a driven side, respectively, and a transmission belt such as a V-ribbed belt is trained around each pulley, has been widely used.

In a V-ribbed belt, the surfaces of V-shaped ribs are covered with a reinforcing fabric. In this case, in order to prevent the reinforcing fabric from falling off from the surfaces of the V-shaped ribs, using a composite fiber layer containing an isocyanate compound and a fiber member containing a cellulose-based fiber (see, for example, PATENT LITERATURE 1) or using a composite fiber layer containing an isocyanate compound, a resin component, and a fiber member containing a cellulose-based fiber (see, for example, PATENT LITERATURE 2) as the reinforcing fabric has been proposed.

### LIST OF CITATIONS

### PATENT LITERATURE

PATENT LITERATURE 1: Japanese Laid-Open Patent Publication JP 2019- 120 402 A
PATENT LITERATURE 2: Japanese Laid-Open Patent Publication JP 2020- 063 841 A

### SUMMARY OF THE INVENTION

### TECHNICAL PROBLEM

In the V-ribbed belts described in PATENT LITERATURES 1 and 2, the configuration of the reinforcing fabric is limited. Hence, the object underlying the invention is to provide a V-ribbed belt having a structure with improved durability.

### SOLUTION TO PROBLEM

The present inventors have conducted an intensive study to improve the adhesiveness of a reinforcing fabric covering the surfaces of V-shaped ribs, have found a V-ribbed belt having excellent adhesiveness of a reinforcing fabric on the basis of a new idea different from those of PATENT LITERATURES 1 and 2, and have completed the present invention.
(1) A V-ribbed belt according to the present invention is a V-ribbed belt including a plurality of V-shaped ribs, wherein
   each of the plurality of V-shaped ribs includes a V-shaped rib body formed from a crosslinked rubber composition and a fiber member covering a surface of the V-shaped rib body, the crosslinked rubber composition is a crosslinked product of an uncrosslinked rubber composition containing a rubber component, a crosslinking agent, and at least either an unsaturated carboxylic acid metal salt or a maleimide compound, and
   a total amount of the unsaturated carboxylic acid metal salt and the maleimide compound per 100 parts by mass of the rubber component is 1 to 40 parts by mass.

In the V-ribbed belt, by using, as the crosslinked rubber composition forming the V-shaped rib body, the crosslinked product of the uncrosslinked rubber composition containing the rubber component, the crosslinking agent, and a predetermined amount of the unsaturated carboxylic acid metal salt and/or the maleimide compound, the adhesiveness of the fiber member, which covers the V-shaped rib body, to the V-shaped rib body can be made good.

(2) In the V-ribbed belt, the fiber member preferably contains a cellulose-based fiber.

This is because the cellulose-based fiber is a fiber whose adhesiveness to the V-shaped rib body can be enhanced by combining with the rubber composition containing the above ingredients.

(3) In the V-ribbed belt, preferably, the fiber member is not subjected to an adhesion treatment.

In the V-ribbed belt, even if the fiber member is not subjected to an adhesion treatment, the adhesiveness between the fiber member and the rubber composition forming the V-shaped rib body is excellent.

### ADVANTAGEOUS EFFECTS OF THE INVENTION

The V-ribbed belt according to the present invention has excellent adhesiveness between the V-shaped rib body and the fiber member. Therefore, peeling is less likely to occur therebetween, and the V-ribbed belt has excellent durability and wear resistance.

### BRIEF DESCRIPTION OF DRAWINGS

- FIG. 1: is a diagram schematically showing a part of a V-ribbed belt according to one embodiment of the present invention.
- FIG. 2A: is a cross-sectional view of a crosslinking device.
- FIG. 2B: is an enlarged cross-sectional view of a part of the crosslinking device shown in FIG. 2A.
- FIG. 3A: is a diagram for illustrating a method for manufacturing the V-ribbed belt shown in FIG. 1.
- FIG. 3B: is a diagram for illustrating the method for manufacturing the V-ribbed belt shown in FIG. 1.
- FIG. 3C: is a diagram for illustrating the method for manufacturing the V-ribbed belt shown in FIG. 1.
- FIG. 4: illustrates a layout of pulleys of a belt durability tester in a durability evaluation test.
- FIG. 5: illustrates a layout of pulleys of a belt durability tester in a transmission ability test under a wet condition.

### DETAILED DESCRIPTION

Hereinafter, an embodiment of the present invention will be described with reference to the drawings.

### V-Ribbed Belt

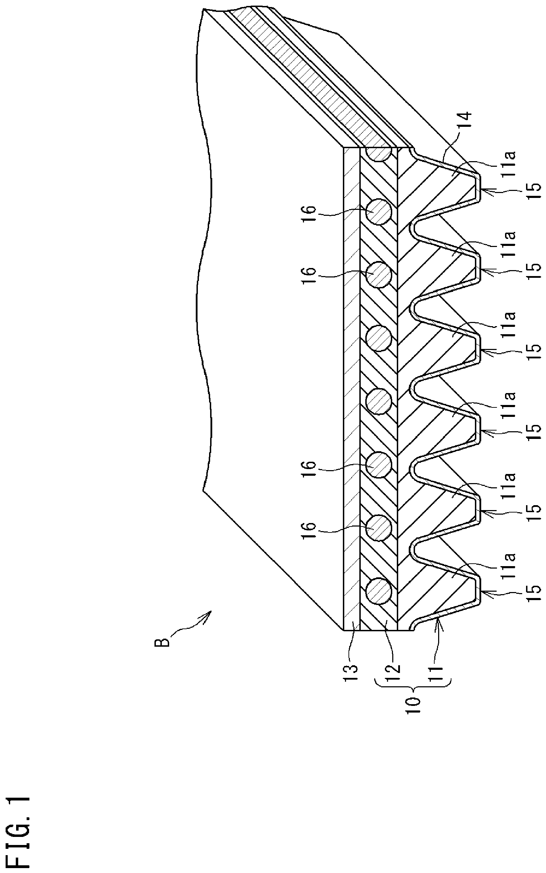

FIG. 1 is a diagram schematically showing a part of a V-ribbed belt B according to one embodiment of the present invention.

The V-ribbed belt B is used, for example, for an auxiliary driving belt transmission device provided in an automotive engine compartment, and has a belt circumference of not less than 700 mm and not greater than 3000 mm, a belt width of not less than 10 mm and not greater than 36 mm, and a belt thickness of not less than 3.5 mm and not greater than 5.0 mm.

The V-ribbed belt B includes a double-layered belt body 10 including a compression rubber layer 11 on the belt inner peripheral side and an adhesive rubber layer 12 on the belt outer peripheral side. A backface reinforcing fabric 13 is attached to the surface on the belt outer peripheral side of the belt body 10. A rib-side reinforcing fabric 14 is provided on the surface on the rib side of the belt body 10. In addition, a core wire 16 is embedded in the adhesive rubber layer 12 so as to form a helical pattern having a pitch in the belt width direction.

A plurality of V-shaped rib bodies 11a are formed on the compression rubber layer 11 so as to protrude on the inner peripheral side. The plurality of V-shaped rib bodies 11a are each formed as a ridge having a substantially inverted triangular cross section and extending in the belt longitudinal direction, and are aligned in the belt width direction. The thickness of the compression rubber layer 11 is, for example, not less than 2.2 mm and not greater than 3.2 mm.

The adhesive rubber layer 12 is formed in a belt shape having a horizontally long rectangular cross section. The thickness of the adhesive rubber layer 12 is, for example, not less than 1.0 mm and not greater than 2.5 mm.

The backface reinforcing fabric 13 is formed from, for example, a fabric material, a knitted fabric, a non-woven fabric, or the like, using yarns made of cotton, polyamide fibers, polyester fibers, aramid fibers, or the like. The fabric material is, for example, plain-woven, twilled, or sateen-woven.

In order to provide adhesiveness with respect to the belt body 10, an adhesion treatment of immersing the backface reinforcing fabric 13 in an RFL aqueous solution and heating the backface reinforcing fabric 13 before molding processing, and/or an adhesion treatment of coating the outer peripheral surface of the adhesive rubber layer 12 with rubber cement and drying the surface, may be performed for the backface reinforcing fabric 13. The thickness of the backface reinforcing fabric 13 is, for example, not less than 0.4 mm and not greater than 1.2 mm.

Instead of the backface reinforcing fabric 13, a backface rubber layer having a thickness of, for example, not less than 0.4 mm and not greater than 0.8 mm may be provided. From the viewpoint of suppressing generation of sound during back-surface driving, the grain of a woven fabric may be transferred to the surface of the backface rubber layer.

Each of the compression rubber layer 11 and the adhesive rubber layer 12 is formed from a crosslinked rubber composition. The crosslinked rubber composition is a crosslinked product obtained by: heating and pressurizing an uncrosslinked rubber composition (raw material composition) obtained by blending and kneading various rubber compounding ingredients including a crosslinking agent and an unsaturated carboxylic acid metal salt and/or a maleimide compound with a rubber component; and crosslinking the rubber component by the crosslinking agent.

The compression rubber layer 11 and the adhesive rubber layer 12 may be formed from the same crosslinked rubber composition, or may be formed from different crosslinked rubber compositions.

In the case where a backface rubber layer is provided, the backface rubber layer may be formed from the same crosslinked rubber composition as that of either one of or both the compression rubber layer 11 and the adhesive rubber layer 12, or may be formed from a crosslinked rubber composition different from those of the compression rubber layer 11 and the adhesive rubber layer 12.

In the case where the V-ribbed belt B has a backface rubber layer, from the viewpoint of suppressing occurrence of adhesion due to contact between the belt backface and a flat pulley, the backface rubber layer is preferably formed from a rubber composition slightly harder than that of the adhesive rubber layer 12.

Examples of the rubber component included in the raw material composition include: ethylene-α-olefin elastomers such an ethylene-propylene-diene terpolymer (EPDM), an ethylene-propylene copolymer (EPM), an ethylene-butene copolymer (EDM), and an ethylene-octene copolymer (EOM); chloroprene rubber (CR); chlorosulfonated polyethylene rubber (CSM); and hydrogenated acrylonitrile rubber (H-NBR). As the rubber component, one or more of these rubbers are preferably used, and ethylene-α-olefin elastomers are more preferably used, and EPDM is further preferably used.

Examples of the crosslinking agent included in the raw material composition include sulfur and an organic peroxide.

Examples of rubber compounding ingredients other than the crosslinking agent include a reinforcing material such as carbon black, a filler, an antioxidant, a softener, a vulcanization accelerator, and a vulcanization accelerator aid.

In addition, the raw material composition may contain a short fiber. However, preferably, the raw material composition forming the adhesive rubber layer 12 does not contain a short fiber from the viewpoint of adhesiveness to the core wire 16.

The raw material composition used for forming the compression rubber layer 11 further contains at least either an unsaturated carboxylic acid metal salt or a maleimide compound.

The total amount of the unsaturated carboxylic acid metal salt and the maleimide compound per 100 parts by mass of the rubber component is 1 to 40 parts by mass.

The compression rubber layer 11 formed from a crosslinked product of a raw material composition (uncrosslinked rubber composition) containing such a predetermined amount of the unsaturated carboxylic acid metal salt and/or the maleimide compound has excellent adhesion to the rib-side reinforcing fabric 14.

The unsaturated carboxylic acid metal salt is composed of an unsaturated carboxylic acid and a metal. Examples of the unsaturated carboxylic acid include unsaturated monocarboxylic acids such as acrylic acid and methacrylic acid, unsaturated dicarboxylic acids such as maleic acid, fumaric acid, and itaconic acid, monomethyl maleate, and monoethyl itaconate.

The metal is not particularly limited as long as the metal forms a salt together with an unsaturated carboxylic acid, and beryllium, magnesium, calcium, strontium, barium, titanium, chromium, molybdenum, manganese, iron, cobalt, nickel, copper, silver, zinc, cadmium, aluminum, tin, lead, mercury, antimony, or the like can be used.

As the unsaturated carboxylic acid metal salt, only one metal salt may be used, or two or more metal salts may be used in combination.

Among these, zinc diacrylate or zinc dimethacrylate is preferable.

As the maleimide compound, a bismaleimide compound having two maleimide groups in the molecule is preferable. Examples of the bismaleimide compound include N,N'-m-phenylene bismaleimide, N,N'-1,2-ethylene bismaleimide, N,N'-1,2-propylene bismaleimide, 4,4'-bismaleimide diphenylmethane, N,N'-(4,4-diphenylmethane)bismaleimide, bis(3-ethyl-5-methyl-4-maleimidephenyl)methane, 2,2'-bis[4-(4-maleimidephenoxy)phenyl]propane, m-phenylene bis(methylene)bismaleimide, m-phenylene bis(methylene)biscitraconimide, and 1,1'-(methylenedi-4,1-phenylene)bismaleimide.

As the bismaleimide compound, only one bismaleimide compound may be used, or two or more bismaleimide compounds may be used in combination.

Among these, N,N'-m-phenylene bismaleimide is preferable.

As described above, the total amount of the unsaturated carboxylic acid metal salt and the maleimide compound per 100 parts by mass of the rubber component is 1 to 40 parts by mass.

If the total amount is less than 1 part by mass, the adhesiveness between the compression rubber layer 11 and the rib-side reinforcing fabric 14 is insufficient.

On the other hand, if the total amount exceeds 40 parts by mass, the compression rubber layer 11 may become hard and the crack durability of the V-ribbed belt B may decrease.

The amount of the unsaturated carboxylic acid metal salt per 100 parts by mass of the rubber component is preferably 5 to 20 parts by mass.

In this case, it is possible to suppress an increase in material cost while ensuring the required adhesive strength.

The amount of the maleimide compound per 100 parts by mass of the rubber component is preferably 3 to 10 parts by mass.

In this case, it is possible to suppress an increase in material cost while ensuring the required adhesive strength.

The blending formula of the raw material composition used for forming the adhesive rubber layer 12 may be different from that of the raw material composition used for forming the compression rubber layer 11. The raw material composition used for forming the adhesive rubber layer 12 may not necessarily contain an unsaturated carboxylic acid metal salt and a maleimide compound.

The surfaces of the plurality of V-shaped rib bodies 11a of the compression rubber layer 11 are covered with the rib-side reinforcing fabric 14. The thickness of the rib-side reinforcing fabric 14 is, for example, not less than 0.1 mm and not greater than 1.5 mm. V-shaped ribs 15 are formed by the V-shaped rib bodies 11a covered with the rib-side reinforcing fabric 14. The surface of each V-shaped rib 15 covered with the rib-side reinforcing fabric 14 serves as a pulley contact surface.

Each V-shaped rib 15 has, for example, a rib height of not less than 2.0 mm and not greater than 3.0 mm, and the width between the base ends thereof is, for example, not less than 1.0 mm and not greater than 3.6 mm. The number of V-shaped ribs 15 is, for example, not less than three and not greater than ten (six in FIG. 1).

The rib-side reinforcing fabric 14 may be formed from a woven fabric or a knitted fabric. Examples of the weave structure of the woven fabric include plain weave, twill weave, sateen weave, and derivative weave thereof. Examples of the knitting structure of the knitted fabric include flat stitch, rib stitch, pearl stitch, and other derivative stitch for weft knitting, and single denbigh stitch, single vandyke stitch, and other derivative stitch for warp knitting.

From the viewpoint of covering the plurality of V-shaped rib bodies 11a of the compression rubber layer 11, the rib-side reinforcing fabric 14 is preferably formed from a highly elastic knitted fabric.

Preferably, the rib-side reinforcing fabric 14 is not subjected to an adhesion treatment.

In the V-ribbed belt B, since the compression rubber layer 11 is formed from the above-described crosslinked rubber composition, even if the rib-side reinforcing fabric 14 is not subjected to an adhesion treatment, the compression rubber layer 11 and the rib-side reinforcing fabric 14 are adhered to each other with sufficient adhesive strength.

In addition, the V-ribbed belt B including the rib-side reinforcing fabric 14 which is not subjected to an adhesion treatment has better resistance to producing abnormal sound under a wet condition than a V-ribbed belt including a rib-side reinforcing fabric that is subjected to an adhesion treatment.

It is inferred that this is because a rib-side reinforcing fabric that is not subjected to an adhesion treatment tends to have better water absorption characteristics than a rib-side reinforcing fabric that is subjected to an adhesion treatment.

Moreover, as the rib-side reinforcing fabric 14 which is not subjected to an adhesion treatment, a rib-side reinforcing fabric containing a cellulose-based fiber is preferable since such a rib-side reinforcing fabric is suitable for ensuring excellent water absorption characteristics as a result of an adhesion treatment not being performed thereon.

Furthermore, from the viewpoint of ensuring excellent water absorption characteristics, in the rib-side reinforcing fabric 14, the cellulose-based fiber is preferably exposed on the surface (the inner peripheral surface of the V-ribbed belt B).

In the embodiment of the present invention, the rib-side reinforcing fabric 14 may be subjected to an adhesion treatment.

In the V-ribbed belt according to the present invention, the rib-side reinforcing fabric not being subjected to an adhesion treatment means that an adhesion treatment of immersing the rib-side reinforcing fabric in an adhesive is not performed and the adhesive is not adhered to the surface of the rib-side reinforcing fabric.

In the present invention, examples of the "adhesion treatment of immersion in an adhesive" include a treatment of immersion in an epoxy resin solution or an isocyanate resin solution and heating, a treatment of immersion in an RFL aqueous solution and heating, and a treatment of immersion in rubber cement and drying.

The rib-side reinforcing fabric 14 is formed containing a cellulose-based fiber. That is, in the rib-side reinforcing fabric 14, the cellulose-based fiber is used as a warp and a weft of a woven fabric or as a knitting yarn of a knitted fabric.

Examples of the cellulose-based fiber include cellulose fibers derived from natural plants such as wood pulp of needle-leaved trees and broad-leaved trees, bamboo fibers, sugar cane fibers, cotton fibers, and kapok seed hair fibers, bast fibers of hemp, kozo (paper mulberry), and mitsumata (oriental paperbush), and leaf fibers of Manila hemp and New Zealand hemp; cellulose fibers derived from animals such as sea squirt cellulose; bacterial cellulose fibers; algae cellulose fibers; cellulose ester fibers; and regenerated cellulose fibers such as rayon, cupra, and lyocell.

Among these, cotton fibers are preferable from the viewpoint of practicality as a fiber material.

The proportion of the cellulose-based fiber in the fibers contained in the rib-side reinforcing fabric 14 is preferably not less than 50 % by mass and more preferably not less than 70 % by mass, and may be 100 % by mass.

The core wire 16 is embedded in an intermediate portion in the belt thickness direction of the adhesive rubber layer 12 so as to form a helical pattern having a pitch in the belt width direction.

The core wire 16 is formed from a twisted yarn made of polyamide fiber, polyester fiber, aramid fiber, polyamide fiber, or the like. The diameter of the core wire 16 is, for example, not less than 0.5 mm and not greater than 2.5 mm, and the dimension between centers of the core wires 16 adjacent to each other in a cross-section is, for example, not less than 0.05 mm and not greater than 0.20 mm.

The core wire 16 is preferably subjected to one or more of an adhesion treatment of immersing the core wire 16 in an epoxy resin solution or an isocyanate resin solution and heating the core wire 16, an adhesion treatment of immersing the core wire 16 in an RFL aqueous solution and then heating the core wire 16, and an adhesion treatment of immersing the core wire 16 in rubber cement and then drying the core wire 16.

Next, a method for manufacturing the V-ribbed belt B will be described with reference to the drawings.

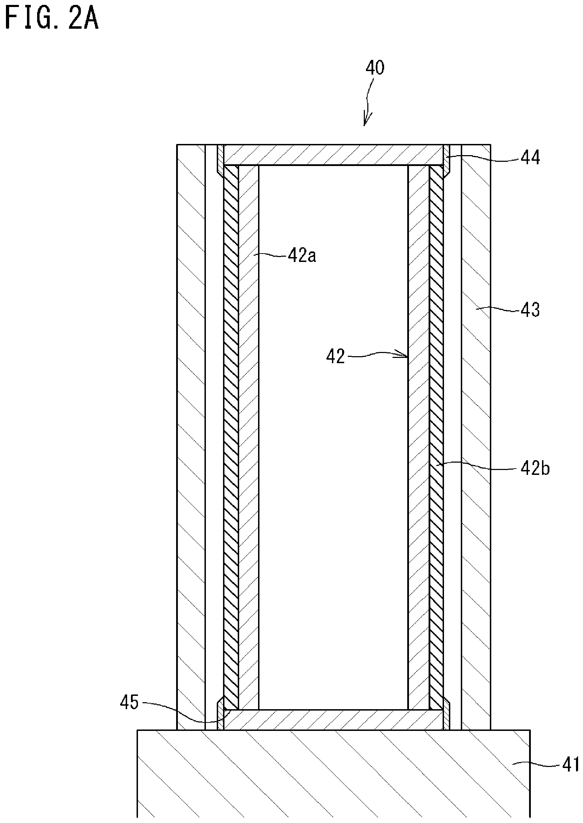

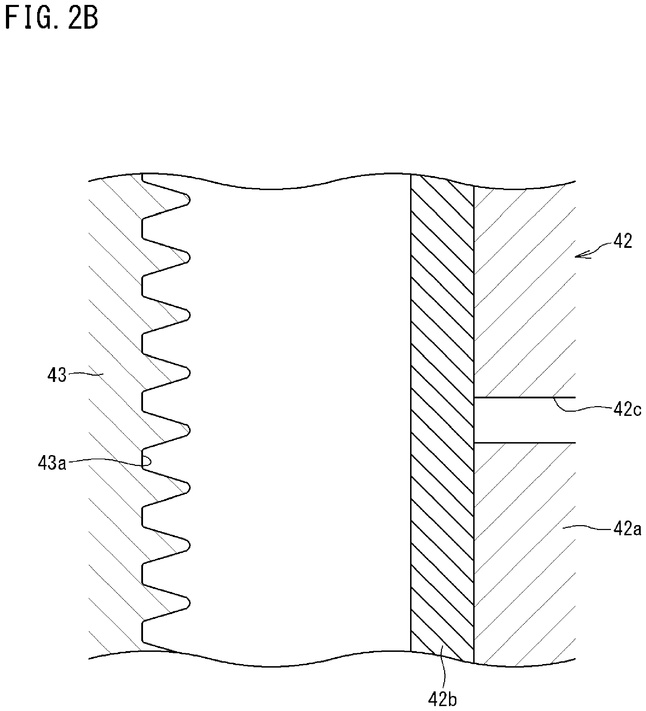

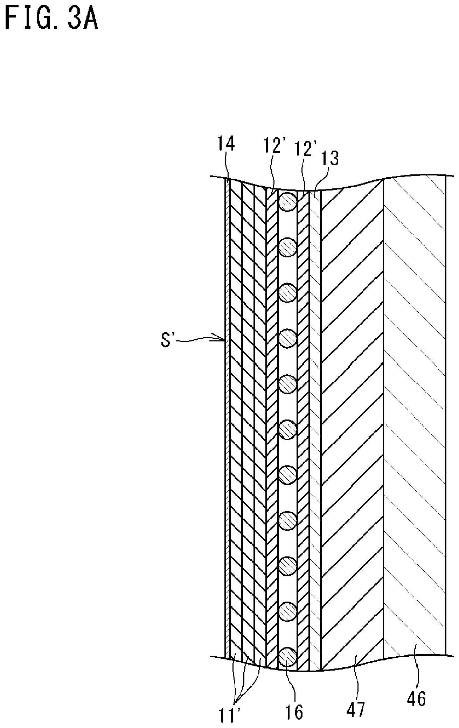

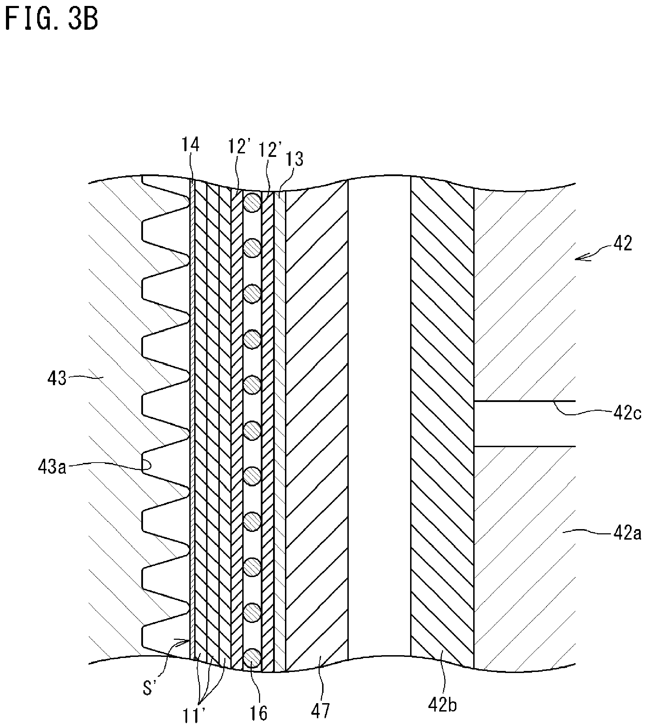

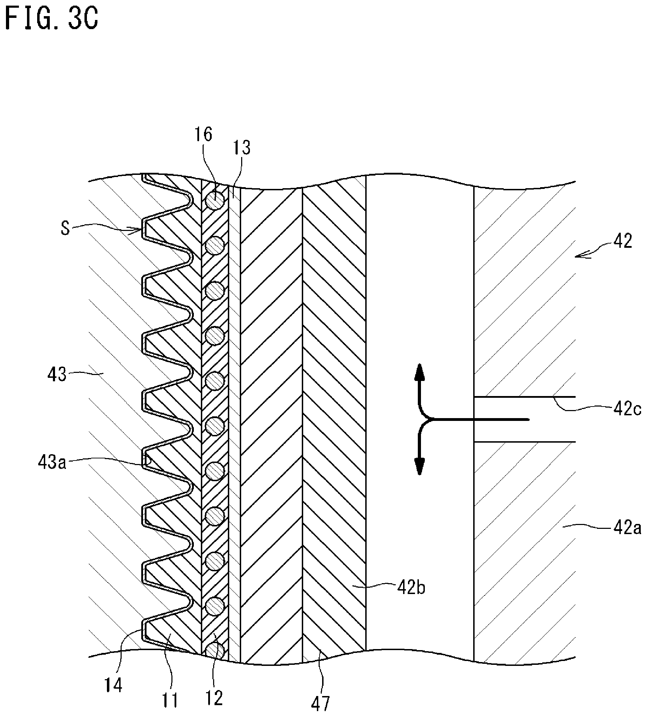

FIG. 2A and FIG. 2B illustrate a crosslinking device 40 used for manufacturing the V-ribbed belt B according to the present embodiment. FIG. 3A, FIG. 3B, and FIG. 3C are each a diagram for illustrating the method for manufacturing the V-ribbed belt B according to the present embodiment.

The crosslinking device 40 includes a base 41, a columnar expansion drum 42 erected on the base 41, and a cylindrical mold 43 provided outside the expansion drum 42.

The expansion drum 42 has a drum body 42a formed in a hollow columnar shape, and a cylindrical expansion sleeve 42b made of rubber and fitted on the outer periphery of the drum body 42a. A large number of ventilation holes 42c are formed on an outer peripheral portion of the drum main body 42a so as to communicate with the interior of the drum body 42a. Both end portions of the expansion sleeve 42b are sealed by fixing rings 44 and 45 between the drum body 42a and the expansion sleeve 42b, respectively.

The crosslinking device 40 is provided with pressurizing means (not shown) for introducing high-pressure air into the drum main body 42a to pressurize the interior of the drum main body 42a. The crosslinking device 40 is configured such that when the high-pressure air is introduced into the drum body 42a by the pressurizing means, the high-pressure air passes through the ventilation holes 42c and enters between the drum body 42a and the expansion sleeve 42b to expand the expansion sleeve 42b radially outward.

The cylindrical mold 43 is configured to be attachable to and removable from the base 41. The cylindrical mold 43 attached to the base 41 is provided concentrically with the expansion drum 42 at an interval from the expansion drum 42. The cylindrical mold 43 is provided with a plurality of V-shaped rib forming grooves 43a formed on the inner peripheral surface thereof so as to extend in the circumferential direction and be aligned in the axial direction (groove width direction). Each V-shaped rib forming groove 43a is formed so as to be narrower toward the groove bottom side.

Specifically, each V-shaped rib forming groove 43a is formed such that a cross-sectional shape thereof is the same as that of the V-shaped rib 15 of the V-ribbed belt B to be manufactured. The crosslinking device 40 is provided with heating means and cooling means (both not shown) for the cylindrical mold 43. The crosslinking device 40 is configured such that it is possible to control the temperature of the cylindrical mold 43 by the heating means and the cooling means.

In the method for manufacturing the V-ribbed belt B according to the embodiment, first, the rubber compounding ingredients including the crosslinking agent and the unsaturated carboxylic acid metal salt and/or the maleimide compound are blended with the rubber component and kneaded with a kneading machine such as a kneader or a Banbury mixer, and the obtained uncrosslinked rubber composition is formed into a sheet shape by calendar molding or the like to produce an uncrosslinked rubber sheet 11' for the compression rubber layer 11. Similarly, an uncrosslinked rubber sheet 12' for the adhesive rubber layer 12 is also produced.

In addition, the rib-side reinforcing fabric 14 and the backface reinforcing fabric 13 are prepared, and an adhesion treatment is performed thereon as necessary. Preferably, the adhesion treatment is performed on the backface reinforcing fabric 13, and is not performed on the rib-side reinforcing fabric 14. The backface reinforcing fabric 13 and the rib-side reinforcing fabric 14 may be formed in a tubular shape in advance. Furthermore, the core wire 16 is prepared, and an adhesion treatment is performed on the core wire 16 as necessary.

Then, as shown in FIG. 3A, a rubber sleeve 47 is placed on a cylindrical drum 46 having a smooth surface, and the backface reinforcing fabric 13 and the uncrosslinked rubber sheet 12' for the adhesive rubber layer 12 are wrapped in this order and stacked over the rubber sleeve 47. The core wire 16 is helically wound over the uncrosslinked rubber sheet 12', and the uncrosslinked rubber sheet 12' for the adhesive rubber layer 12 and the uncrosslinked rubber sheet 11' for the compression rubber layer 11 are further wrapped in this order over the core wire 16. Finally, the rib-side reinforcing fabric 14 is wrapped over the uncrosslinked rubber sheet 11' to form an uncrosslinked slab S'.

Then, the rubber sleeve 47 on which the uncrosslinked slab S' has been provided is removed from the cylindrical drum 46. As shown in FIG. 3B, the rubber sleeve 47 is fitted into the inner peripheral surface side of the cylindrical mold 43, and then the cylindrical mold 43 on which the uncrosslinked slab S' has been provided is attached to the base 41 so as to cover the expansion drum 42.

Subsequently, while heating the cylindrical mold 43, as shown in FIG. 3C, high-pressure air is injected between the drum body 42a and the expansion sleeve 42b of the expansion drum 42 through the ventilation holes 42c to expand the expansion sleeve 42b. At this time, the uncrosslinked slab S' is pressed against the cylindrical mold 43, the uncrosslinked rubber sheets 11' and 12' enter the V-shaped rib forming grooves 43a while pressing and stretching the rib-side reinforcing fabric 14, and crosslinking of the rubber components of the uncrosslinked rubber sheets 11' and 12' proceeds to integrate the uncrosslinked rubber sheets 11' and 12' and combine the uncrosslinked rubber sheets 11' and 12' with the rib-side reinforcing fabric 14, the core wire 16, and the backface reinforcing fabric 13.

Finally, a cylindrical belt slab S is molded. The molding temperature of the belt slab S is, for example, not lower than 100 °C and not higher than 180 °C, the molding pressure of the belt slab S is, for example, not lower than 0.5 MPa and not higher than 2.0 MPa, and the molding time of the belt slab S is, for example, not shorter than 10 minutes and not longer than 60 minutes.

Then, the high-pressure air is removed from between the drum body 42a and the expansion sleeve 42b of the expansion drum 42. Then, the belt slab S molded on the inner peripheral surface of the cylindrical mold 43 is taken out, the belt slab S is cut into round slices each having a predetermined number of V-shaped ribs 15, and each round slice is turned inside out, whereby the V-ribbed belt B is obtained.

### EXAMPLES

Hereinafter, the present invention will be more specifically described by means of examples, but the present invention is not limited to the examples below.

Here, V-ribbed belts of Examples 1 to 9 and

Comparative Examples 1 and 2 were produced and evaluated.

### Compression Rubber Material

As a rubber material for forming a compression rubber layer, EPDM (manufactured by JSR Corporation, trade name: EP22) was used as a rubber component, and a predetermined amount of HAF carbon black (manufactured by Tokai Carbon Co., Ltd., trade name: SEAST 3), 8 parts by mass of a plasticizer (manufactured by JAPAN SUN OIL COMPANY, LTD., trade name: Sunflex 2280), 1.5 parts by mass of sulfur (manufactured by Hosoi Chemical Industry Co., Ltd., trade name: Oil Sulfur), 1 part by mass of a vulcanization accelerator (1) (manufactured by OUCHI SHINKO CHEMICAL INDUSTRIAL CO., LTD., trade name: NOCCELER MSA-G), 3 parts by mass of a vulcanization accelerator (2) (manufactured by SANSHIN CHEMICAL INDUSTRY CO., LTD., trade name: SANCELER EM-2), 5 parts by mass of zinc oxide (manufactured by Sakai Chemical Industry Co., Ltd., trade name: Zinc Oxide No. 2) as a vulcanization accelerator aid, a predetermined amount of zinc methacrylate (manufactured by Kawaguchi Chemical Industry Co., Ltd., trade name: ACTOR ZMA), and a predetermined amount of a maleimide compound (manufactured by OUCHI SHINKO CHEMICAL INDUSTRIAL CO., LTD., trade name: VULNOC PM) were blended per 100 parts by mass of the rubber component.

The rubber material was kneaded with a Banbury mixer and then rolled with a calendar roll to produce a sheet having a thickness of 1.0 mm.

The blending formula of the compression rubber material is also shown in Table 1.

**Table 1**

| | | Example | | | | | | | | | Comparative Example | |
|---|---|---|---|---|---|---|---|---|---|---|---|---|
| | | 1 | 2 | 3 | 4 | 5 | 6 | 7 | 8 | 9 | 1 | 2 |
| Compression rubber material | EPDM | 100 | 100 | 100 | 100 | 100 | 100 | 100 | 100 | 100 | 100 | 100 |
| | HAF carbon black | 80 | 80 | 80 | 80 | 70 | 50 | 80 | 80 | 80 | 80 | 80 |
| | Plasticizer | 8 | 8 | 8 | 8 | 8 | 8 | 8 | 8 | 8 | 8 | 8 |
| | Sulfur | 1.5 | 1.5 | 1.5 | 1.5 | 1.5 | 1.5 | 1.5 | 1.5 | 1.5 | 1.5 | 1.5 |
| | Vulcanization accelerator (1) | 1 | 1 | 1 | 1 | 1 | 1 | 1 | 1 | 1 | 1 | 1 |
| | Vulcanization accelerator (2) | 3 | 3 | 3 | 3 | 3 | 3 | 3 | 3 | 3 | 3 | 3 |
| | Zinc oxide | 5 | 5 | 5 | 5 | 5 | 5 | 5 | 5 | 5 | 5 | 5 |
| | Zinc methacrylate | 1 | 3 | 6 | 10 | 20 | 40 | 0 | 0 | 5 | 0 | 0 |
| | Maleimide compound | 0 | 0 | 0 | 0 | 0 | 0 | 3 | 5 | 3 | 0 | 0 |

### Adhesive Rubber Material

In each of Examples and Comparative Examples, compounding raw materials were blended with the same blending formula as that of the compression rubber material, kneaded with a Banbury mixer, and then rolled with a calendar roll to prepare an adhesive rubber material for forming an adhesive rubber layer.

### Core Wire

A twisted yarn made of polyester fibers was prepared, and an adhesion treatment of immersing the yarn in an RFL aqueous solution and then heating and drying the yarn was performed on the twisted yarn, to prepare a core wire.

### Rib-Side Reinforcing Fabric

As a rib-side reinforcing fabric, a flat knitted (jersey stitch) fabric using cotton fibers was prepared.

The above knitted fabric that was not subjected to an adhesion treatment was referred to as knit 1.

The above knitted fabric that was subjected to an adhesion treatment of immersing the fabric in an RFL aqueous solution and then heating and drying the fabric, was referred to as knit 2.

### Backface Reinforcing Fabric

The knit 2 prepared as a rib-side reinforcing fabric was subjected to an RFL treatment and used as a backface reinforcing fabric.

### Example 1

A V-ribbed belt that has the same configuration as described above in the embodiment and in which the knit 1 was used as a rib-side reinforcing fabric and the above-described ones were used as a compression rubber material, an adhesive rubber material, a core wire, and a backface reinforcing fabric, was produced by the manufacturing method described with reference to FIG. 2A to FIG. 3C, and was regarded as a V-ribbed belt of Example 1. Here, a V-ribbed belt having six V-shaped ribs and a V-ribbed belt having three V-shaped ribs were produced.

In addition, an evaluation sample for measuring the adhesive strength between the compression rubber layer and the rib-side reinforcing fabric used in Example 1 was separately produced.

Here, a sheet formed from an uncrosslinked compression rubber material rolled with a calendar roll was cut and stacked to produce a stacked body having a length of 180 mm, a width of 40 mm, and a thickness of 6 mm. The knit 1, which is a knitted fabric made of cotton fibers, was placed on the stacked body and pressed at 160 °C for 30 minutes to produce an evaluation sample.

### Examples 2 to 9 and Comparative Example 1

V-ribbed belts each having six V-shaped ribs and V-ribbed belts each having three V-shaped ribs were produced in the same manner as Example 1, except that the compression rubber material shown in Table 1 was used.

In addition, an evaluation sample for measuring the adhesive strength between the compression rubber layer and the rib-side reinforcing fabric used in each of Examples 2 to 9 and Comparative Example 1 was produced using the same method as in Example 1.

### Comparative Example 2

A V-ribbed belt having six V-shaped ribs and a V-ribbed belt having three V-shaped ribs were produced in the same manner as Example 1, except that the compression rubber material shown in Table 1 was used and the knit 2 was used as a rib-side reinforcing fabric.

In addition, an evaluation sample for measuring the adhesive strength between the compression rubber layer and the rib-side reinforcing fabric used in Comparative Example 2 was produced using the same method as in Example 1.

The following evaluations were made for the V-ribbed belts and the evaluation samples produced in Examples and Comparative Examples. The results are shown in Table 2.

### Test Methods

### Adhesive Strength Test

A cut was made with a width of 25.4 mm in the evaluation sample produced in each of Examples and Comparative Examples for measuring the adhesive strength between the crosslinked compression rubber material and the rib-side reinforcing fabric, and the ends of the rubber and the knitted fabric were chucked. Then, a peeling test was performed under the condition of a peeling speed of 50 mm/min, and the adhesive strength was measured. The results are shown in Table 2.

### Durability Evaluation Test

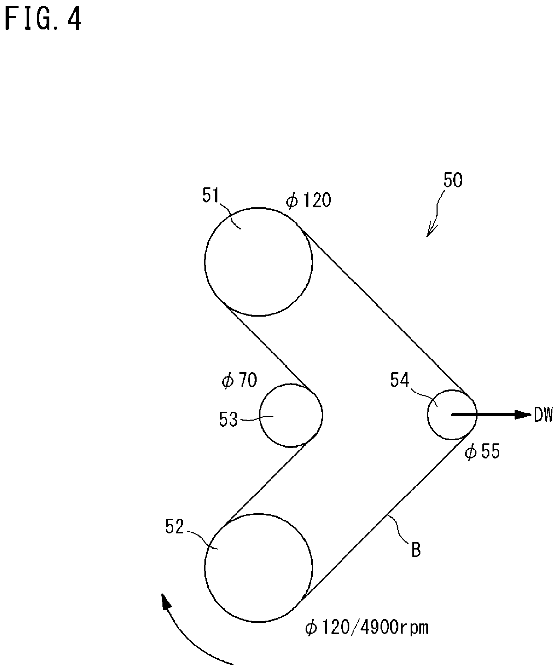

FIG. 4 illustrates a layout of pulleys of a belt durability tester 50 in a durability evaluation test.

In the belt durability tester 50, a large-diameter driven pulley 51 and a drive pulley 52 each of which is a rib pulley having a pulley diameter of 120 mm are provided vertically at an interval, an idler pulley 53 which is a flat pulley having a pulley diameter of 70 mm is provided at the middle in the vertical direction between these pulleys 51 and 52, and a small-diameter driven pulley 54 which is a rib pulley having a pulley diameter of 55 mm is further provided on the right side of the idler pulley 53.

The belt durability tester 50 is configured such that the V-ribbed belt B is trained around the pulleys such that the V-shaped rib side of the V-ribbed belt B is in contact with the large-diameter driven pulley 51, the drive pulley 52, and the small-diameter driven pulley 54, which are rib pulleys, and the backface side of the V-ribbed belt B is in contact with the idler pulley 53 which is a flat pulley. The small-diameter driven pulley 54 is positioned such that the angle at which the V-ribbed belt B is trained therearound is 90°.

The V-ribbed belt B having three V-shaped ribs of each of Examples and Comparative Examples was set to the belt durability tester 50, a rotational load of 11.8 kW was applied to the large-diameter driven pulley 51, a dead weight of 686 N was applied laterally to the small-diameter driven pulley 54 so as to apply belt tension, and the drive pulley 52 was rotated at a rotation speed of 4900 rpm at an atmosphere temperature of 120 °C to cause the belt to run. Then, after running for 168 hours, it was confirmed whether or not the rib-side reinforcing fabric 14 of the V-ribbed belt B was peeled off from the compression rubber layer. The results are shown in Table 2.

### Transmission Ability Test under Wet Condition

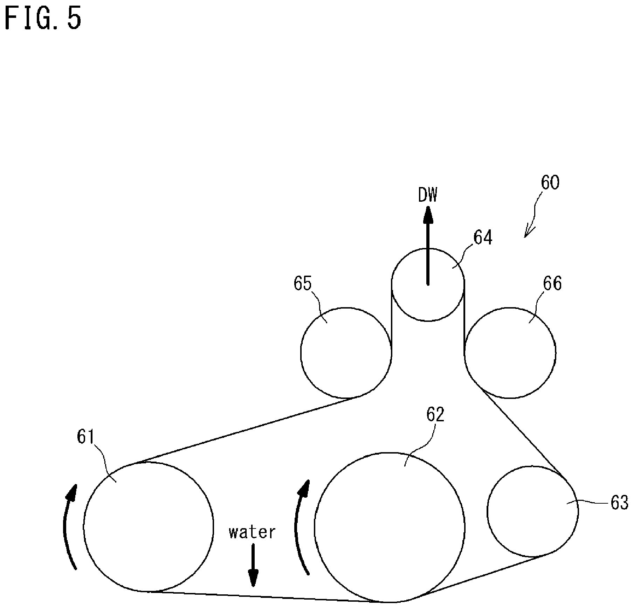

FIG. 5 illustrates a layout of pulleys of a belt durability tester 60 in a transmission ability test under a wet condition.

In the belt durability tester 60, a first driving pulley 61 which is a rib pulley having a pulley diameter of 121.6 mm is provided at the lower left, and a second driving pulley 62 which is a rib pulley having a pulley diameter of 141.5 mm is provided on the right side of the first driving pulley 61. A first driven pulley 63 which is a rib pulley having a pulley diameter of 77.0 mm is provided obliquely upward on the right side of the second driving pulley 62, and a second driven pulley 64 which is a rib pulley having a pulley diameter of 61.0 mm is provided above the second driving pulley 62.

A first idler pulley 65 which is a flat pulley having a pulley diameter of 76.2 mm is provided between the first driving pulley 61 and the second driven pulley 64, and a second idler pulley 66 which is a flat pulley having a pulley diameter of 76.2 mm is provided between the first driven pulley 63 and the second driven pulley 64. The second driven pulley 64 is provided so as to be movable up and down, and is configured to be able to apply an axial load.

The V-ribbed belt B having six V-shaped ribs of each of Examples and Comparative Examples was trained around the first and second driving pulleys 61 and 62 and the first and second driven pulleys 63 and 64 such that the V-shaped rib side thereof was in contact with these pulleys, the V-ribbed belt B was also trained around the first and second idler pulleys 65 and 66 such that the backface reinforcing fabric side thereof was in contact with these pulleys, and an axial load (DW) of 706 N was applied upward to the second driven pulley 64 to apply belt tension.

The angle at which the V-ribbed belt B was trained around the second driving pulley 62 was 39°. Then, the first driving pulley 61 and the second driving pulley 62 were rotated at rotation speeds of 800 rpm and 931 rpm, respectively, in the same direction under an atmosphere having a temperature of 21 °C, whereby the V-ribbed belt B was forcibly slipped on the second driving pulley 62. In addition, water droplets were dropped at a rate of 300 ml per minute onto the surfaces of the V-shaped ribs on the right side of the first driving pulley 61 where the V-ribbed belt B was started to be trained therearound. Then, the maximum value of generated torque was measured by a torque meter provided to the second driving pulley 62.

Moreover, whether or not abnormal sound occurred was confirmed at the same time as the transmission ability test under a wet condition. The case where no abnormal sound was observed by hearing was evaluated as A, and the case where abnormal sound was observed by hearing was evaluated as B. The results are shown in Table 2.

**Table 2**

| | Example | | | | | | | | | Comparative Example | |
|---|---|---|---|---|---|---|---|---|---|---|---|
| | 1 | 2 | 3 | 4 | 5 | 6 | 7 | 8 | 9 | 1 | 2 |
| Rib-side reinforcing fabric | Knit 1 | Knit 1 | Knit 1 | Knit 1 | Knit 1 | Knit 1 | Knit 1 | Knit 1 | Knit 1 | Knit 1 | Knit 2 |
| Adhesive strength between crosslinked compression rubber material and rib-side reinforcing fabric [N/inch] | 12 | 14 | 17 | 21 | 27 | 29 | 15 | 19 | 22 | 10 | 24 |
| Presence or absence of peeling in durability evaluation test | Absence | Absence | Absence | Absence | Absence | Absence | Absence | Absence | Absence | Presence | Absence |
| Maximum torque in transmission ability test under wet condition [N·m] | 18.1 | 18.3 | 18.4 | 18.6 | 18.8 | 19.1 | 18.3 | 18.5 | 18.5 | 18.3 | 17.9 |
| Resistance to producing abnormal sound in transmission ability test under wet condition | A | A | A | A | A | A | A | A | A | A | B |

As shown in Table 2, in the V-ribbed belt according to the embodiment of the present invention, adhesion between the compression rubber layer and the rib-side reinforcing fabric can be ensured.

In addition, the resistance to producing abnormal sound under a wet condition can be improved by using a rib-side reinforcing fabric that is not subjected to an adhesion treatment.

### INDUSTRIAL APPLICABILITY

The V-ribbed belt according to the present disclosure is useful, for example, for an auxiliary mechanism driving belt transmission device of an automobile, and the like.

### LIST OF REFERENCE SIGNS

- 10: belt body
- 11: compression rubber layer
- 11a: V-shaped rib body
- 12: adhesive rubber layer
- 13: backface reinforcing fabric
- 14: rib-side reinforcing fabric
- 15: V-shaped rib
- 16: core wire
- 40: crosslinking device
- 50, 60: durability tester
- 11', 12': uncrosslinked rubber sheet
- B: V-ribbed belt

## Claims

1. A V-ribbed belt (B) comprising a plurality of V-shaped ribs (15),
wherein
each of the plurality of V-shaped ribs (15) includes a V-shaped rib body (11a) formed from a crosslinked rubber composition and a fiber member covering a surface of the V-shaped rib body (11a),
the crosslinked rubber composition is a crosslinked product of an uncrosslinked rubber composition containing a rubber component, a crosslinking agent, and at least either an unsaturated carboxylic acid metal salt or a maleimide compound, and
a total amount of the unsaturated carboxylic acid metal salt and the maleimide compound per 100 parts by mass of the rubber component is 1 to 40 parts by mass.

2. The V-ribbed belt (B) according to claim 1,
wherein the fiber member contains a cellulose-based fiber.

3. The V-ribbed belt (B) according to claim 1 or 2,
wherein the fiber member is not subjected to an adhesion treatment.
